# Europäisches Patentamt
# European Patent Office
# Office européen des brevets

(19)

(11) Veröffentlichungsnummer: **0 246 629**
**B1**

(12)

# EUROPÄISCHE PATENTSCHRIFT

(45) Veröffentlichungstag der Patentschrift:
16.08.89

(51) Int. Cl.⁴: **B07B 7/06, B07B 1/22**

(21) Anmeldenummer: 87107326.8

(22) Anmeldetag: 20.05.87

(54) Siebmaschine für pulverförmige, rieselfähige Stoffe.

(30) Priorität: 20.05.86  CH 2028/86

(43) Veröffentlichungstag der Anmeldung:
25.11.87 Patentblatt 87/48

(45) Bekanntmachung des Hinweises auf die Patenterteilung:
16.08.89 Patentblatt 89/33

(84) Benannte Vertragsstaaten:
AT CH DE FR GB IT LI LU

(56) Entgegenhaltungen:
DE-C- 56 224
GB-A- 1 361 712
US-A- 3 837 483

(73) Patentinhaber: Isliker, Alwin, Claridenstrasse 39,
CH-8600 Dübendorf(CH)

(72) Erfinder: Isliker, Alwin, Claridenstrasse 39,
CH-8600 Dübendorf(CH)

(74) Vertreter: Zmyj, Erwin, Dipl.-Ing., Rosenheimer
Strasse 52, D-8000 München 80(DE)

ACTORUM AG

## Beschreibung

Die Erfindung bezieht sich auf eine Siebmaschine für pulverförmige, rieselfähige Stoffe, mit einem in einem Gehäuse antreibbar und drehbar gelagerten Siebkorb dem der zu siebende Stoff über eine am Gehäuse angeordnete Zuführleitung zuführbar ist und mit einer am Gehäuse angeordneten Abführleitung für den gesiebten Stoff.

Bei einer bekannten Siebmaschine dieser Art ("Maschinenkunde für Müller", Selbstverlag der Schweizerischen Berufsbildungskommission für Müller, S. 238, 239) liegt die Drehachse des Siebkorbes horizontal. Der Siebkorb ist hierbei als Zylindertrommel ausgebildet, an dessen einer Stirnseite der zu siebende Stoff, wie z.B. Mehl, zusammen mit Förderluft eingeführt wird. Die Austragstelle des gesiebten Stoffes liegt radial an der Mantelfläche der Zylindertrommel und zwar unterhalb der horizontal liegenden Zylindertrommel. Im Inneren der Siebtrommel befinden sich relativ zur Siebwandung bewegte, in bezug auf die Längsachse der Siebtrommel spiralförmig ausgebildete Räumleisten, die den in die Siebtrommel eingebrachten Stoff, welcher sich aufgrund der Zentrifugalkraft an die Siebwandung anlegt, auflockern, um eine Verstopfung der Siebwandung, bedingt durch Brückenbildung, zu vermeiden. Diese bekannte Siebmaschine weist mehrere Nachteile auf. Der liegende Siebkorb nimmt den zu siebenden Stoff im Inneren auf und rotiert zusammen mit dieser Stoffmenge. Bei einem erwünschten hohen Durchsatz befindet sich eine große Stoffmenge innerhalb des Siebkorbes. Für den Antrieb dieser beträchtlichen Massen muß eine hohe Motorleistung installiert werden. Diese Antriebsleistung ist deshalb auch sehr hoch, weil die Räumleisten, die zur Auflockerung des durch Fliehkraft am Siebmantel anliegenden Stoffes dienen, bei dieser Räumarbeit eine hohe Antriebsleistung erfordern. Bei diesem Räumvorgang ist ein hoher Reibeffekt unvermeidbar, was nicht nur die Antriebsleistung erhöht, sondern auch zu einer Erwärmung des zu siebenden Stoffes führt. Dies ist insbesondere bei Mehl unerwünscht. Weiterhin wird durch diesen Reibeffekt eine Zerkleinerung der abzutrennenden Teile bewirkt, was insbesondere bei schädlichen Beimengungen unerwünscht ist. Weiterhin erfordert eine solche Siebmaschine mit großvolumigem Siebkorb und starkem Antriebsmotor einen beträchtlichen Platzbedarf, da die Siebmaschine groß und entsprechend schwer baut. Da der zu siebende Stoff mittels Förderluft durch die Siebmaschine hindurchgefördert wird, stellt der eine verhältnismäßig große Stoffmenge enthaltende Siebkorb eine beträchtliche Drossel in diesem Fördersystem dar. Dies bedeutet also einen erheblichen Druckabfall im Fördersystem, so daß ein entsprechend starkes Gebläse installiert werden muß. Da, wie schon erwähnt, der liegende Siebkorb eine beträchtliche Menge an zu siebendem Stoff enthält, ist ein Umstellen der Siebmaschine auf einen anderen zu siebenden Stoff (z.B. Übergang von der einen Mehlsorte auf eine andere Mehlsorte) mit Schwierigkeiten verbunden, denn der Siebkorb muß zuerst von seiner von ihm getragenen beträchtlichen Stoffmenge vollständig entleert werden. Es hat sich hierbei gezeigt, daß ein großvolumiger Siebkorb, aus dem nahezu aller zu siebender Stoff ausgetragen worden ist, von einer gewissen Restmenge praktisch nicht befreit werden kann, da die große bereits freie Siebfläche des Siebkorbes die Förderluft hindurchläßt, ohne die in den Ecken des Siebkorbes noch lagernden Restmengen an Stoff mitzunehmen. Ein gewünschtes vollständiges Entleeren eines solchen Siebkorbes bereitet jedenfalls größte Mühe.

Aufgabe der Erfindung ist es, eine Siebmaschine der eingangs erläuterten Art so auszugestalten, daß der Siebvorgang bei geringer Baugröße, kleiner Motorleistung, äußerst geringer Restmenge nach Abschluß des Siebvorganges, bei schonender Behandlung des zu siebenden Stoffes, also ohne mechanische Einwirkung und Erwärmung durchgeführt werden kann, wobei obendrein auch noch die Möglichkeit bestehen soll, den Förderstrom, der den zu siebenden Stoff trägt zu unterstützen, bzw. den Siebvorgang auch ohne Förderluft durchführen zu können.

Diese Aufgabe wird bei einer Siebmaschine nach dem Oberbegriff des Anspruchs 1 erfindungsgemäß dadurch gelöst, daß die Zuführleitung einen bis auf einen Spalt an die Wand des Siebkorbes heranreichenden Leitungsabschnitt aufweist, und daß der Siebkorb an der dem zuführenden Leitungsabschnitt abgewandten Wandseite mit Gebläseflügeln versehen ist.

Aufgrund dieser Ausgestaltung wird ein Auffüllen des Siebkorbes mit dem zu siebenden Stoff vermieden, weil er immer im wesentlichen gegen eine gereinigte Siebfläche fällt, die der Austrittsfläche der Mündung des Leitungsabschnittes entspricht, der bis auf einen geringen Spalt bis an die Siebwandung heranreicht. Im Siebkorb verbleiben dann nur noch diejenigen Anteile des zu siebenden Stoffes, die größer als die Siebmaschenweite sind. Der Spalt muß also so groß sein, daß die zu erwartenden abzusondernden Teile zwischen der Mündung des Leitungsabschnittes und der Siebwand hindurchtreten können. Je nach Beladung des angeförderten Stoffstromes wird es dann eine Zeit dauern, bis der Siebkorb von diesen groben Teilen befreit werden muß. Es wird aber eine Auffüllung des Siebkorbes mit dem durch das Sieb hindurchtretenden Stoffes vermieden, wodurch die eingangs erläuterten Nachteile, nämlich eine hohe Antriebsleistung, vermieden wird. Da die wirksame Siebfläche jeweils auf den Flächenbereich begrenzt ist, der der Mündungsfläche des Leitungsabschnittes entspricht und der Siebkorb nur die auszusiebenden Teile aufnimmt, kommt man mit einem kleinen Siebkorb und damit mit einer kleinen Siebmaschine aus, die einen geringen Platzbedarf neben der schon erwähnten geringen Antriebsleistung erfordert. Die Antriebsleistung ist auch deshalb so gering, weil die bei der bekannten Maschine sich aufbauende Stoffschicht, welche durch die Räumleisten aufgelockert wurde, entfällt. Dies ist der wesentliche Grund für eine schonende Behandlung des zu siebenden Stoffes, da die mechanische Einwirkung und die damit zusammenhängende Erwärmung entfällt. Durch die Anordnung von Gebläseflügeln wird der Förderstrom, d.h. der Luftstrom, der zur Förderung des zu siebenden Stoffes dient, unterstützt. Da die Gebläseflügel auf derjenigen Wandweite des Siebkorbes angeordnet sind, die der Mündung des Leitungsabschnittes gegenüberliegt, wird durch die rotierenden Gebläseflügel ein Luftstrom erzeugt, der den durch das Sieb hindurchgetretenen Stoff weiterfördert, wodurch nicht nur eine Unterstützung des Förderstromes eintritt, sondern sogar die Möglichkeit besteht, den zu siebenden Stoff ohne Förderluftstrom in den Siebkorb einzubringen und zu sieben. Somit werden alle Einzelziele der eingangs angegebenen Aufgabe erreicht.

Gemäß weiteren vorteilhaften Ausgestaltungen der Erfindung kann der Leitungsabschnitt mit seiner Mündung sowohl im Inneren des Siebkorbes als auch an der Außenseite des Siebkorbes liegen, wobei die Gebläseflügel jeweils entsprechenden der grundsätzlichen Angabe im Anspruch 1 an der dem Leitungsabschnitt abgewandten Wandseite des Siebkorbes vorgesehen sind, d.h. bei Anordnung der Mündung im Inneren des Siebkorbes liegen die Gebläseflügel an der Außenwandung und bei Anordnung der Mündung an der Außenwand liegen die Gebläseflügel an der Innenwand des Siebkorbes.

Eine besonders einfache konstruktive Ausgestaltung ergibt sich durch die Maßnahme nach Anspruch 4 und 5, weil hierdurch der Siebkorb nicht nur in einfacher Weise auswechselbar oder zu Reinigungszwecken entnehmbar ist, sondern die Antriebsverbindung ist trotz leichter Lösbarkeit des Siebkorbes von der Antriebswelle einfach gestaltet und der Siebkorb in einfacher Weise während des Betriebes in seiner Betriebslage gehalten.

Entsprechend einer weiteren vorteilhaften Ausgestaltung der Erfindung ist es möglich, daß sich nur einige der Gebläseflügel über die gesamte Höhe des Siebkorbes erstrecken. Dies hängt von der benötigen Förderleistung für den bereits durch das Sieb durchgetretenen Stoff ab.

Selbstverständlich können auch alle Gebläseflügel sich über die gesamte Höhe des Siebkorbes erstrecken.

Eine vorteilhafte Ausgestaltung, die einen geringen Platzbedarf verursacht, ergibt sich dadurch, daß der Siebkorb schalenförmig nach Art eines Parabolspiegels, konisch oder zylinderförmig ausgebildet ist.

In vorteilhafter Ausgestaltung der Erfindung weisen die Gebläseflügel einen Abstand zur Wand des Siebkorbes auf. Hierdurch wird ein Stau des durch das Sieb hindurchtretenden Stoffes an den Anlageflächen verhindert.

Wenn dagegen die Gebläseflügel sehr schmal ausgebildet werden, so kann es in Abhängigkeit von dem zu siebenden Stoff unter Umständen auch möglich sein, daß die Gebläseflügel an der Wand des Siebkorbes anliegen. Hierdurch dienen sie gleichzeitig als Stütze für das Sieb, wodurch weitere Maßnahmen zur Erhöhung der Steifigkeit des Siebes vermieden sind.

Die Ausgestaltung nach Anspruch 9 ist eine vorteilhafte Voraussetzung dafür, daß der Spalt zwischen der Mündung und der Siebkorbwand am gesamten Umfang der Mündung gleich groß ist.

Eine geringfügige Abweichung von dieser Anpassung führt zu einer weiteren vorteilhaften Ausgestaltung, die darin besteht, daß die Mündung des Leitungsabschnittes längs Ihres Umfanges einen unterschiedlich großen Spalt zur Wand des Siebkorbes aufweist, derart, daß der gegen die Drehrichtung des Siebkorbes am weitesten hervorragende Wandbereich der Mündung den geringsten Spalt zur Wand des Siebkorbes aufweist, der sich zu dem gegenüberliegenden in Drehrichtung am weitesten hervorragenden Wandbereich der Mündung stetig vergrößert. Hierdurch wird erreicht, daß jeder Siebabschnitt, der aufgrund der Drehung des Siebkorbes an die Mündung des Leitungsabschnittes herangeführt wird, einen geringeren Spalt zum Leitungsabschnitt vorfindet, als in dem Bereich, den er aufgrund der Drehung des Siebkorbes verläßt und welcher dem erstgenannten Bereich in Drehrichtung betrachtet, gegenüberliegt. Hierdurch ist es möglich, den gegen die Drehrichtung am weitesten herausragenden Bereich des Leitungsabschnittes sehr eng an die Wandung des Siebkorbes heranzuführen und zwar kann der Spalt so eng gemacht werden, daß bereits ausgesiebte grobe Teile nicht mehr in den Mündungsbereich eintreten können, während an der gegenüberliegenden Seite des Leitungsabschnittes die durch die Siebwandung aufgefangenen groben Teile aufgrund des erweiterten Spaltes aus dem Mündungsbereich austreten. Hierdurch wird also vermieden, daß bereits ausgeschiedene Grobteile wieder in den aktiven Siebbereich gelangen, in welchem sie die Siebleistung verminden würden.

Damit die Siebmaschine unterschiedlichen Korngrößen des zu siebenden Stoffes anpaßbar ist, ist in weiterer vorteilhafter Ausgestaltung der Erfindung der Leitungsabschnitt zur Einstellung des Spaltes zwischen der Mündung und dem Siebkorb längsverstellbar.

Zur Vergrößerung der aktiven Siebfläche kann in vorteihafter Weise die Mündung des Leitungsabschnittes trompetenförmig erweitert sein.

Eine besonders günstige Wirkung im Hinblick auf die Förderung des zu siebenden Stoffes ergibt sich gemäß einer vorteilhaften Ausbildung der Erfindung dadurch, daß die Austrittsmündung des Leitungsabschnittes und die Eintrittsmündung der Abführleitung getrennt durch die dazwischenliegenden Siebkorbwandung einander gegenüberliegen. Hierdurch gelangt der durch das Sieb hindurchtretende Stoff unmittelbar in die Abführleitung, wodurch Reibungsverluste des zu fördernden Stoffes innerhalb der Siebmaschine, d.h. innerhalb des den Siebkorb umgebenden Gehäuses vermieden werden.

Die erfindungsgemäße Siebmaschine eignet sich insbesondere zum Sieben von Mehl, da die erforderliche schonende Behandlung gewährleistet ist. Aufgrund der geringen Abmessungen ist es möglich, die erfindungsgemäße Siebmaschine in eine Förderleitung zwischen Silo und Verbraucher bzw. Verwiegestation einzusetzen, so daß in der Backstube stets gesiebtes Mehl angefördert wird, was den bisher üblichen Siebvorgang nach dem Fördern des Mehles überflüssig macht.

Der Einbau der erfindungsgemäßen Siebmaschine in einer Förderleitung wird nicht nur aufgrund der geringen Abmessungen ermöglicht, sondern dieser Einbau wird auch dadurch erleichtert, daß die Siebmaschine keine bevorzugte Einbaulage aufweist, d.h. der Siebkorb kann um eine Achse rotieren, die jeden beliebigen Winkel einnimmt.

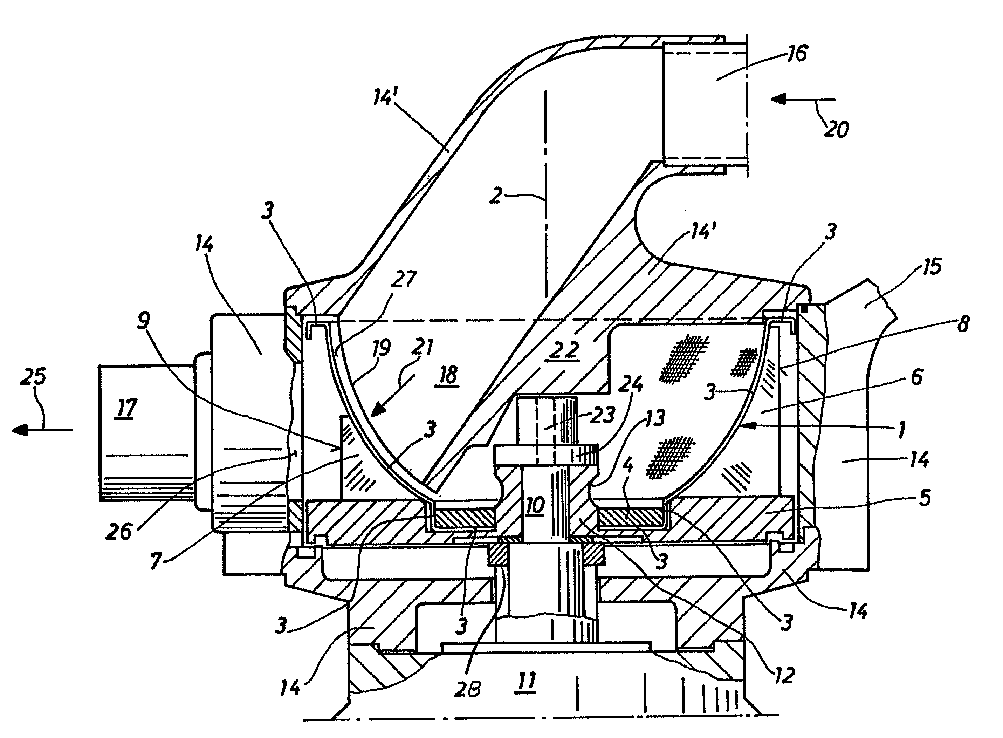

Die Erfindung wird nachfolgend anhand eines in der Zeichnung dargestellten Ausführungsbeispieles näher erläutert. Die einzige Figur dieser Zeichnung zeigt einen teilweisen Längsschnitt durch eine Siebmaschine.

Wie aus der Zeichnung ersichtlich ist ein zu einer Achse 2 rotationssymmetrisch ausgebildeter Siebkorb 1 vorgesehen, dessen Wand 3 schalenförmig nach Art eines Parabolspiegels ausgebildet ist. In einer napfartigen Bodenvertiefung des Siebkorbes 1 befindet sich eine kreisförmige Bodenplatte 4. Der obere Siebkorbrand ist nach außen abgebogen, so daß sich ein U-förmig profilierter Rand ergibt. Der schalenförmige Siebkorb besteht beispielsweise aus einem Drahtgeflecht. Die napfförmgie Bodenvertiefung des Siebkorbes 1 mit der darin liegenden Bodenplatte 4 liegt innerhalb einer Vertiefung einer Scheibe 5, die mehrere Funktionen hat. Die Scheibe 5 trägt mehrere über den Umfang des Siebkorbes 1 gleichmäßig verteilte Gebläseflügel 6 und 7, die im wesentlichen senkrecht zur Wand 3 des Siebkorbes stehen und an ihrer radial innen liegenden Seite der Form der Siebwand 3 angepaßt eng an dieser anliegen und die Siebwand dadurch abstützen. Die Außenkontur 8 und 9 der Gebläseflügel 6 und 7 ist geradlinig und weist einen gleichmäßigen Abstand zur Rotationsachse 2 auf. Die Gebläseflügel 6 und 7, die aus Blech, Leichtmetallguß oder Kunststoff bestehen können, haben eine geringe Dicke, wodurch nur ein äußerst geringer Teil der Siebfläche abgedeckt wird. Da die Gebläseflügel gleichzeitig Stützfunktion für den Siebkorb haben, ist ein zusätzliches Stützgeflecht entbehrlich. In der Zeichnung sind unterschiedlich große Gebläseflügel 6 und 7 dargestellt. Der Gebläseflügel 6 erstreckt sich nahezu über die gesamte Höhe des Siebkorbes 1, während sich der Gebläseflügel 7 nur etwa über die halbe Höhe des Siebkorbes erstreckt. Es können z.B. vier Gebläseflügel 6 und acht Gebläseflügel 7 vorhanden sein, die abwechselnd über den gesamten Umfang des Siebkorbes gleichmäßg verteilt angeordnet sind. Da die Gebläseflügel 6 und 7 eine Stützwirkung auf den Siebkorb 1 ausüben, kann dieser aus einem sehr feinen Gewebe hergestellt sein, ohne daß eine Verformung des Siebkorbes bei hohen Umdrehungszahlen aufgrund der auftretenden Fliehkräfte eintreten würde. Bei der Verwendung der Siebmaschine zum Sieben von Mehl wird der Siebkorb beispielsweise mit einer Drehzahl von 3000 U/min angetrieben. Die die Gebläseflügel 6 und 7 tragende Scheibe 5, mit der auch der Siebkorb 1 fest verbunden ist, hat aber auch noch die Funktion einer Schwungmasse, da beim Sieben von pulverförmigen, rieselförmigen Stoffen, wie z.B. Mehl, beim Eintrag des zu siebenden Stoffes in die Siebmaschine Stöße auftreten können, da das Mehl in der Praxis oft unregelmäßig zugeführt wird. Diese Stöße können auch dann auftreten, wenn die Siebmaschine innerhalb einer Leitung eingeschaltet ist, die zwischen einem Silo und einer Verwiegestation verlegt ist. Durch die Schwungradwirkung der Scheibe 5 läuft die Siebmaschine ruhiger, da die von dem zu siebenden Stoff auf die Maschine ausgeübten Stöße durch die Schwungmaschine kompensiert werden. Durch den Siebvorgang wird trotz Stöße beim Eintrag des zu siebenden Stoffes der Austragsstrom vergleichmäßigt.

Der Siebkorb 1, die Gebläseflügel 6 und 7, die Platte 4 und die Scheibe 5 bilden ein Drehteil, das axial abziehbar auf einer Motorwelle 10 eines Elektromotors 11 sitzt. Durch auf der Motorwelle 10 angeordnete Mitnehmer 28, die in Ausnehmungen der Scheibe 5 eingreifen, wird die drehfeste Verbindung zwischen der Motorwelle und der Scheibe 5 hergestellt. Die Scheibe 5 weist eine Nabe 12 auf, durch die die Motorwelle 10 hindurchfaßt. Die Nabe 12 ist mit Einbuchtungen 13 versehen und dient somit als Handhabe zum Abziehen des aus den Bauteilen 1, 4, 5, 6, 7 und 12 gebildeten Drehteils, das zum Auswechseln oder Reinigen des Siebkorbes von der Motorwelle 10 abgezogen werden kann.

Das vorerwähnte antreibbare und drehbare Drehteil liegt innerhalb eines Gehäuses 14, das mit einem Gehäuse des Elektromotors 11 verblockt ist. Das Gehäuse 14 ist mit einem Gehäusedeckel 14' verschließbar, der in nicht dargestellter Weise an einem Tragarm 15 des Gehäuse 14 schwenkbar angelenkt ist. In der dargestellten Stellung ist der Gehäusedeckel 14' geschlossen und dichtet somit das Gehäuse nach außen ab. Ins Gehäuseinnere führt eine Zuführleitung 16 und aus dem Gehäuseinneren führt eine Abführleitung 17 weg.

Die Zuführleitung 16 hat einen bis in die Nähe der Wandung 3 des Siebkorbes 1 führenden Leitungsabschnitt 18, der als entsprechender Hohlraum im Deckel 14' ausgebildet ist. Dieser Leitungsabschnitt 18 hat eine Mündung 19, die der Form der Wandung 3 des Siebkorbes längs ihres gesamten Umfanges angepaßt ist. Hierbei weist die Mündung 19 an ihrem gesamten Umfang den gleichen Abstand bzw. Spalt 27 zur Wandung 3 des Siebkorbes 1 auf. Aus der Darstellung ist ersichtlich, daß dieser Spalt nur verhältnismäßig gering ist. Der zu siebende Stoff tritt in Richtung der Pfeile 20 und 21 ins Innere des Siebkorbes 1 ein. Der Gehäusedeckel 14' hat einen Anschlag 22 für einen auf einem Ansatz 23 der Motorwelle 10 sitzenden Niederhalter 24, der aus einem reibungsarmen Material, wie z.B. einem Polyamid, besteht. Auf diesem Niederhalter 24 stützt sich der Ansatz 22 des Gehäusedeckels 14' in seiner geschlossenen Lage ab und hält somit die Nabe 12, die damit einstückig ausgebildete Scheibe 5 und letzlich den Siebkorb in der dargestellten Arbeitslage.

Beim Antrieb des Siebkorbes 1 werden die ebenfalls auf der Scheibe 5 befestigten Gebläseflügel 6 und 7 mit gleicher Drehzahl wie der Siebkorb gedreht, so daß innerhalb des Gehäuses 14, 14' ein Förderluftstrom in der Pfeilrichtung 20, 21' und 25 erzeugt wird. Im dargestellten Ausführungsbeispiel liegen die Austrittsmündung 19 des Leitungsabschnittes und die Eintrittsmündung 26 der Abführleitung 17 getrennt durch die dazwischenliegende Wand 3 des Siebkorbes einander gegenüber. Die Mündung 19 des Leitungsabschnittes 18 kann trompetenförmig erweitert sein, und zwar beim dargestellten Ausführungsbeispiel in der Horizontalebene, also rechtwinklig zur Zeichenblattebene. Obwohl aus der zeichnerischen Darstellung des Ausführungsbeispieles nicht ersichtlich, kann die Mündung 19 des Leitungsabschnittes 18 in Längsrichtung des Leitungsabschnittes verstellbar sein, um den Spalt 27 zwischen der Mündung 19 und der Wandung 3 des Siebkorbes einstellen zu können. Der Siebkorb 1 kann außer der dargestellten schalenartigen Form auch eine zylindrische oder konische Mantelfläche haben.

Die Arbeitsweise der dargestellten Siebmaschine ist folgende:

Der zu siebende Stoff, z.B. Mehl, tritt an der Mündung 19 aus der Zuführleitung 16 und 18 aus. Der Mehlstrom trifft hierauf sofort auf die Wandung 3 des sehr schnell drehenden Siebkorbes 1. Durch die am Siebkorb vorhandenen Gebläseflügel 6 und 7 wird eine Luftstrom im Inneren des Gehäuses 14, 14' erzeugt, durch den der zu siebende Stoff durch die Wandung 3 des Siebkorbes und zur Eintrittsmündung 26 der Abführleitung 17 gefördert wird. Der auf die Siebwandung 3 des Siebkorbes 1 auftreffende Stoff wird also sofort durch das Sieb hindurchbewegt, so daß also nicht mehr der Siebkorb mit dem zu siebenden Stoff angefüllt wird. Der Siebkorb muß somit keine zu siebende Stoffmenge ständig in Drehung versetzen. Das Volumen des Siebkorbes 1 kann trotz großem Stoffdurchsatz sehr klein gehalten werden. Der Siebkorb 1 kann leicht vollständig vom zu siebenden Stoff befreit werden, so daß also die Maschine schnell auf einen anderen Stoff umrüstbar ist. Es tritt somit kein Vermischen von verschiedenartigen Stoffen ein. Das schnelle und vollständige Entleeren des Siebkorbes und des Gehäuseinneren wird auch durch das im Gehäuseinneren vorhanden Gebläse 5 bis 7 begünstigt. Wie schon erwähnt, kann die erläuterte Siebmaschine innerhalb einer mit Druckluft arbeitenden Förderleitung eingeschaltet sein, die sich zwischen einem Silo und einer Verarbeitungsstation für den gesiebten Stoff befindet. In diesem Fall wird also der zu siebende Stoff durch die erwähnte Druckluft in der Zuführleitung 16 gefördert. Das im Inneren des Gehäuses der Siebmaschine vorhandene Gebläse 5 bis 7 stellt dann also ein zusätzliches Gebläse in der erwähnten Förderleitung dar. Die erläuterte Siebmaschine kann aber auch als selbständige Maschineneinheit verwendet werden, wobei dann der zu siebende Stoff sozusagen drucklos bei der Zuführleitung 16 eintritt. Durch das im Gehäuseinneren befindliche Gebläse 5 bis 7 wird dann der Stoff durch die Siebmaschine transportiert.

Beim dargestellten Ausführungsbeispiel mit einem schalenförmigen Siebkorb 1 ist die Kontur der Mündung 19 in der dargestellten Vertikalebene konvex gewölbt.

Auch in der nicht sichtbaren Horizontalebene ist die Kontur der Mündung 19 konvex gewölbt. Wenn ein zylindrischer oder konischer Siebkorb verwendet wird, dann ist die Kontur der Mündung 19 lediglich in der nicht gezeigten Horizontalebene konvex gewölbt, entsprechend dem Radius des zylindrischen Siebkorbes, bzw. entsprechend den Radien des konischen Siebkorbes.

Bei dem dargestellten Ausführungsbeispiel wird der zu siebende Stoff dem Inneren des Siebkorbes 1 zugeführt, und der Austrag des gesiebten Stoffes erfolgt an der Außenseite des Siebkorbes. Bei einem anderen Ausführungsbeispiel könnte die Förderrichtung des zu siebenden Stoffes auch in umgekehrter Richtung erfolgen, d.h. der zu siebende Stoff könnte auch von außen her der Siebkorbwandung zugeleitet werden, worauf dann nach dem Sieben der Stoff vom Inneren des Siebkorbes her weggeführt wird. In diesem Fall würde dann die Mündung der Zuführleitung beim dargestellten schalenförmigen Siebkorb konkav verlaufen, ist dann also wieder der Mantelfläche 3 des Siebkorbes 1 so angepaßt, daß die Mündungskontur der Zuführleitung über ihren gesamten Umfang gleichen Abstand von der Siebkorbwandung 3 hat. In diesem Fall würde man dann die Gebläseflügel 6 und 7 mit einer anderen Formgebung an der Innenseite des Siebkorbes anordnen.

## Patentansprüche

1. Siebmaschine für pulverförmige, rieselfähige Stoffe, mit einem in einem Gehäuse (14, 14') antreibbar und drehbar gelagerten Siebkorb (1), dem der zu siebende Stoff über eine am Gehäuse (14, 14') angeordnete Zuführleitung (16) zuführbar ist und mit einer am Gehäuse (14, 14') angeordneten Abführleitung (17) für den gesiebten Stoff, dadurch **gekennzeichnet**, daß die Zuführleitung (16) einen bis auf einen Spalt (27) an die Wand (3) des Siebkorbes (1) heranreichenden Leitungsabschnitt (18) aufweist, und daß der Siebkorb (1) an der dem zuführenden Leitungsabschnitt (18) abgewandten Wandseite mit Gebläseflügeln (6, 7) versehen ist.

2. Siebmaschine nach Anspruch 1, dadurch **gekennzeichnet**, daß der Leitungsabschnitt (18) mit seiner Mündung (19) im Inneren des Siebkorbes (1) liegt und daß die Gebläseflügel (6, 7) an der Außenseite des Siebkorbes (1) vorgesehen sind.

3. Siebmaschine nach Anspruch 1, dadurch **gekennzeichnet**, daß der Leitungsabschnitt (18) mit seiner Mündung (19) an der Außenseite des Siebkorbes (1) liegt und daß die Gebläseflügel (6, 7) an der Innenseite des Siebkorbes (1) vorgesehen sind.

4. Siebmaschine nach einem der Ansprüche 1 bis 3, dadurch **gekennzeichnet**, daß eine Scheibe (5) auf die in das Gehäuse (14, 14') hineinragende Antriebswelle (10) aufsteckbar und mit dieser durch Mitnehmer (28) drehfest kuppelbar ist und daß auf der Scheibe (5) sowohl der Siebkorb (1) als auch die Gebläseflügel (6, 7), die im wesentlichen senkrecht zur Wandung des Siebkorbes (1) stehen, befestigt sind.

5. Siebmaschine nach einem der Ansprüche 1 bis 4, dadurch **gekennzeichnet**, daß die Scheibe (5) eine durch den Boden des Siebkorbes (1) hindurchgreifende Nabe (12) aufweist, durch die die Motorwelle (10) hindurchgreift und daß auf dem herausragenden Motorwellenende (23) ein als Gleitkörper ausgebildeter Niederhalter (24) sitzt, gegen den sich im geschlossenen Zustand des Gehäuses (14, 14') ein am Gehäusedeckel (14') angeordneter Anschlag (22) abstützt.

6. Siebmaschine nach einem der Ansprüche 1 bis 5, dadurch **gekennzeichnet**, daß sich nur einige (6) der Gebläseflügel (6, 7) über die gesamte Höhe des Siebkorbes (1) erstrecken.

7. Siebmaschine nach einem der Ansprüche 1 bis 6, dadurch **gekennzeichnet**, daß der Siebkorb (1) schalenförmig nach Art eines Parabolspiegels, konisch oder zylinderförmig ausgebildet ist.

8. Siebmaschine nach einem der Ansprüche 1 bis 7, dadurch **gekennzeichnet**, daß die Gebläseflügel (6, 7) einen Abstand zur Wand des Siebkorbes aufweisen.

9. Siebmaschine nach einem der Ansprüche 1 bis 8, dadurch **gekennzeichnet**, daß die Mündung (19) des Leitungsabschnittes (18) der Form der benachbarten Siebkorbwandung (3) angepaßt ist.

10. Siebmaschine nach einem der Ansprüche 1 bis 9, dadurch **gekennzeichnet**, daß der Spalt (27) zwischen der Mündung (19) und der Siebkorbwand (3) am gesamten Umfang der Mündung (19) gleich groß ist.

11. Siebmaschine nach einem der Ansprüche 1 bis 9, dadurch **gekennzeichnet**, daß die Mündung (19) des Leitungsabschnittes (18) längs ihres Umfanges einen unterschiedlich großen Spalt (27) zur Wand (3) des Siebkorbes aufweist, derart, daß der gegen die Drehrichtung des Siebkorbes (1) am weitesten hervorragende Wandbereich der Mündung (19) den geringsten Spalt (27) zur Wand (3) des Siebkorbes (1) aufweist, de sich zu dem gegenüberliegenden in Drehrichtung am weitesten hervorragenden Wandbereich der Mündung (19) stetig vergrößert.

12. Siebmaschine nach einem der Ansprüche 1 bis 11, dadurch **gekennzeichnet**, daß der Leitungsabschnitt (18) zur Einstellung des Spaltes (27) zwischen der Mündung (19) und der Siebkorbwandung (3) längenverstellbar ist.

13. Siebmaschine nach einem der Ansprüche 1 bis 12, dadurch **gekennzeichnet**, daß die Mündung (19) des Leitungsabschnittes (18) trompetenförmig erweitert ist.

14. Siebmaschine nach einem der Ansprüche 1 bis 13, dadurch **gekennzeichnet**, daß die Mündung (19) des Leitungsabschnittes (18) und die Eintrittsmündung der Abführleitung (17) getrennt durch die dazwischenliegende Siebkorbwandung (3) einander gegenüberliegen.

15. Verwendung der Siebmaschine nach einem der Ansprüche 1 bis 14 zum Sieben von Mehl.

## Claims

1. Screening machine for flowable pulverulent material having a screening basket (1) which is drivably and rotatably mounted in a housing (14, 14') and to which the material to be screened is feedable by way of a feed line (16) disposed on the housing (14, 14') and having a discharge line (17) for the screened material, disposed on the housing (14, 14'), characterised in that the feed line (16) has a line portion (18) extending short by a gap (27) up to the wall (3) of the screening basket (1) and that the screening basket (1) is provided with blower vanes (6, 7) on the wall side remote from the feed line portion (18).

2. Screening machine according to claim 1, characterised in that the mouth (19) of the line portion (18) is located inside the screening basket (1) and the blower vanes (6, 7) are provided on the outside of the screening basket (1).

3. Screening machine according to claim 1, characterised in that the mouth (19) of the line portion (18) is located on the outside of the screening basket (1) and the blower vanes (6, 7) are provided on the inside of the screening basket (1).

4. Screening machine according to one of claims 1 to 3, characterised in that a disk (5) can be slipped onto a drive shaft (10) projecting into the housing (14, 14') and is connectable nonrotatably therewith by means of carriers (28) and that both the screening basket (1) and the blower vanes (6, 7), which are disposed substantially perpendicular to the wall of the screening basket (1), are fastened on the disk (5).

5. Screenig machine according to one of claims 1 to 4, characterised in that the disk (5) has a hub (12) which engages through the base of the screening basket (1) and through which the motor shaft (10) engages, and that a holding-down device (24) in the form of a sliding element is seated on the projecting end (23) of the motor shaft, a stop (22) disposed on the housing lid (14') coming to rest against said holding-down device when the housing (14, 14') is closed.

6. Screening machine according to one of claims 1 to 5, characterised in that only some (6) of the blower vanes (6, 7) extend over the full height of the screening basket (1).

7. Screening machine according to one of claims 1 to 6, characterised in that the screening basket (1) is saucer-shaped in the manner of a parabolic mirror, conical or cylindrical.

8. Screening machine according to one of claims 1 to 7, characterised in that there is a clearance between the blower vanes (6, 7) and the wall of the screening basket.

9. Screening machine according to one of claims 1 to 8, characterised in that the mouth (19) of the line portion (18) is adapted to the shape of the adjacent screening basket wall (3).

10. Screening machine according to one of claims 1 to 9, characterised in that the gap (27) between the mouth (19) and the screening basket wall (3) is of a uniform size over the entire periphery of the mouth (19).

11. Screening machine to one of claims 1 to 9, characterised in that the gap (27) between the mouth (19) of the line portion (18) and the wall (3) of the screening basket varies along the periphery of the mouth in such a manner that the gap (27) is smallest between the wall (3) of the screening basket (1) and the wall region of the mouth (19) projecting the furthest against the direction of rotation of the screening basket (1) and constantly increases towards the opposite wall region of the mouth (19) projecting furthest in the direction of rotation.

12. Screening machine according to one of claims 1 to 11, characterised in that the line portion (18) is variable in length for adjusting the gap (27) between the mouth (19) and the screening basket wall (3).

13. Screening machine according to one of claims 1 to 12, characterised in that the mouth (19) of the line portion (18) is flared.

14. Screening machine according to one of claims 1 to 13, characterised in that the mouth (19) of the line portion (18) and the inlet mouth of the discharge line (17) lie opposite one another, separated by the screening basket wall (3) disposed between them.

15. Use of the screening machine according to one of claims 1 to 14 to grade flour.

## Revendications

1. Machine à tamiser pour matières pulvérulentes fluides, comprenant un panier de tamisage (1) qui est monté et peut être entraîné en rotation dans un carter (14, 14'), et auquel la matière à tamiser peut être amenée par un conduit d'amenée (16) monté sur le carter (14, 14'), et comprenant un conduit de sortie (17) monté sur le carter (14, 14') pour la matière tamisé, caractérisée par le fait que le conduit d'amenée (16) comporte une portion de conduit (18) arrivant jusqu'à une distance (27) de la paroi (3) du panier de tamisage (1), et par le fait que le panier de tamisage (1) est muni de pales de ventilateur (6, 7) sur le côté de sa paroi qui est opposé à la portion (18) du conduit d'amenée.

2. Machine à tamiser selon la revendication 1, caractérisée par le fait que la portion de conduit (18) est située avec son embouchure (19) à l'intérieur du panir de tamisage (1), et par le fait que les pales de ventilateur (6, 7) sont prévues sur le côté extérieur du panier de tamisage (1).

3. Machine à tamiser selon la revendication 1, caractérisée par le fait que la portion de conduit (18) est située avec son embouchure (19) sur le côté extérieur du panier de tamisage (1), et par le fait que les pales de ventilateur (6, 7) sont prévues sur le côté intérieur du panier de tamisage (1).

4. Machine à tamiser selon l'une des revendications 1 à 3, caractérisée par le fait qu'un disque (5) peut être enfoncé sur un arbre d'entraînement (10) faisant saillie dans le carter (14, 14') et accouplé à cet arbre de manière fixe en rotation par des taquets d'entraînement (28), et par le fait qu'aussi bien le panier de tamisage (1) que les pales de ventilateur (6, 7), lesquelles sont, pour l'essentiel, perpendiculaires à la paroi du panier de tamisage (1), sont fixés sur le disque (5).

5. Machine à tamiser selon l'une des revendications 1 à 4, caractérisée par le fait que le disque (5) comporte un moyeu (12) qui traverse le fond du panier de tamisage (1) et qui est traversé par l'arbre moteur (10), et par le fait qu'est monté sur l'extrémité en saillie (23) de l'arbre moteur un presseur (24) qui est réalisé sous la forme d'un organe de glissement et sur lequel une butée (22) montée sur le couvercle (14') du carter s'appuie dans l'état fermé du carter (14, 14').

6. Machine à tamiser selon l'une des revendications 1 à 5, caractérisée par le fait que seules quelques unes (6) des pales de ventilateur (6, 7) s'étendent sur toute la hauteur du panier de tamisage (1).

7. Machine à tamiser selon l'une des revendications 1 à 6, caractérisée par le fait que le panier de tamisage (1) est réalisé en forme de coupe à la manière d'un miroir parabolique, en forme conique ou en forme cylindrique.

8. Machine à tamiser selon l'une des revendications 1 à 7, caractérisée par le fait que les pales de ventilateur (6, 7) sont à distance de la paroi du panier de tamisage.

9. Machine à tamiser selon l'une des revendications 1 à 8, caractérisée par le fait que l'embouchure (19) de la portion de conduit (18) est adaptée à la forme de la paroi adjacente (3) du panier de tamisage.

10. Machine à tamiser selon l'une des revendications 1 à 9, caractérisée par le fait que la distance (27) entre l'embouchure (19) et la paroi (3) du panier de tamisage reste égale sur tout le pourtour de l'embouchure (19).

11. Machine à tamiser selon l'une des revendications 1 à 9, caractérisée par le fait que l'embouchure (19) de la portion de conduit (18) présente le long de son pourtour une distance (27) par rapport à la paroi (3) du panier de tamisage qui varie de telle manière que la région de la paroi de l'embouchure (19) qui est le plus en saillie à l'opposé de la direction de rotation du panier de tamisage (1), présente la plus faible distance (27) par rapport à la paroi (3) du panier de tamisage (1), cette distance augmentant constamment vers la région opposée de la paroi de l'embouchure (19) qui est le plus en saillie dans la direction de rotation.

12. Machine à tamiser selon l'une des revendications 1 à 11, caractérisée par le fait que la portion de conduit (18) est réglable en longueur en vue du réglage de la distance (27) entre l'embouchure (19) et la paroi (3) du panier de tamisage.

13. Machine à tamiser selon l'une des revendications 1 à 12, caractérisée par le fait que l'embouchure (19) de la portion de conduit (18) s'élargit en forme de trompette.

14. Machine à tamiser selon l'une des revendications 1 à 13, caractérisée par le fait que l'embouchure (19) de la portion de conduit (18) et l'embouchure d'entrée du conduit de sortie (17) se font face en étant séparées par le paroi (3) du panier de tamisage qui est située entre elles.

15. Utilisation de la machine à tamiser selon l'une des revendications 1 à 14 pour le tamisage de la farine.